# EUROPEAN PATENT SPECIFICATION

(11) **EP 1 781 093 B1**
(45) Date of publication and mention of the grant of the patent: **08.03.2017**
(21) Application number: 05756790.1
(22) Date of filing: 24.06.2005
(51) Int. Cl.: A01K 61/00

(54) **CONTAINER FOR USE IN WATER AND A METHOD FOR CONSTRUCTION OF SUCH A CONTAINER**
BEHÄLTER FÜR DIE VERWENDUNG IM WASSER UND VERFAHREN ZUR KONSTRUKTION EINES SOLCHEN BEHÄLTERS
RECIPIENT DESTINE A ETRE UTILISE DANS L'EAU ET SON PROCEDE DE CONSTRUCTION

(30) Priority: 30.06.2004 NO 20042778
(43) Date of publication of application: 09.05.2007
(73) Proprietor: Seafarming Systems AS, 4008 Stavanger (NO)
(72) Inventor: SANDSTAD, Alf Reidar, N-7033 Trondheim (NO)
(74) Representative: Curo AS
(86) International application number: PCT/NO2005/000226
(87) International publication number: WO 2006/004415

(56) References cited:
- EP-A1- 1 169 918
- WO-A1-03/067971
- GB-A- 1 594 832
- US-A- 4 312 296
- US-A- 4 881 482

## Description

The invention relates to a container as defined in claim 1, for use in water, e.g. for locating in the sea for the enclosure of farmed fish, freshwater, or other medias that can be pumped. The invention also includes a method for construction of such containers.

### Background

There is a need for the storage of various substances of large volume in water. An example of this is the need for the collection and storage of freshwater in great amounts in sea areas. For this purpose cylindrical fabric containers which are placed on the surface have been made. Such containers or tanks have limited sturdiness and have been difficult to handle.

For the collection of fish, either for breeding or temporary storage, installations of net cages using a grid of containers in the form of tanks or closed cages, which are held floating in the sea. Existing containers are usually manufactured of seine material, and is thereby often called "farming seine". These are exposed to damage by drift-wood, boat propellers, gnawing by predators, weights, and others. The most common reason of fish escape is installation failure due to wear and tear, and damage. This has resulted in the escape of large amounts of farmed salmon, something that is considered to be one of the most important problems for the industry. In addition, this results in a large financial loss for the breeder. Also escaped farmed salmon are an environmental problem due to the spread of infections, and by the genetic pollution of wild salmon.

To be able to increase the extent of fish farming, it is necessary to improve the containers for farming in such a way that the environmental problems are reduced, and the economics are improved.

US 4881482 relates to a floating storage facility for fluid-like materials which can be used to store products in a water related environment. The floating storage facility includes (a) a waterproof pressure compensating diaphragm suitable for retaining a fluid-like product therein and (b) a flotation collar associated with the diaphragm to enable the diaphragm to be immersed in a designated manner in the body of water.

WO 03/067971 A1 relates to a device for farming of marine organisms, particularly fish, with an extended receptacle which is provided to float partially submerged in the water with a generally horizontal axis and in which water is kept to provide a breeding environment for the organisms.

### Object

The main object of the invention is to provide an environmentally friendly and secure container of a large volume for use in water, with low costs of manufacture, good utilisation properties, and low operating costs.

It is a particular object to provide a container for use in water which can be used for farmed fish, or as a cage to contain fish to be slaughtered with a suitable water system, which is closed for avoiding the spread of infections. It must be provided with a stable and relatively sturdy wall material. A further object is to provide a container which provides more secure emptying of living fish, which is easier and more rapid than by prior art containers.

A further object is to provide a container which can be used for the closed storage of fluids, particularly freshwater, or for storing of other substances, such as fish flour and cereals

A common requirement for these containers is the best possible relationship of strength/weight. They must further be easy to construct, repair and maintain. The must also be able to be dismantled, be height adjustable, and be towable.

### The invention

The invention is defined in Claim 1, which describes a container according to the invention. Claims 2-6 describes favourable details for such a container. In Claim 7 a method for erection of a container according to Claim 1 is described.

A particular advantage of the invention is the good use of rigid sheets which have the ability to absorbing shearing forces and moments in connection with the circular shape of the container.

Another advantage is that the container can be elevated and lowered, such that it can easily be erected, repaired, and possibly removed. The elevation lowering can also be advantageously utilised in connection with filling and emptying.

Further advantages of the invention will appear of the following example.

### Example

The invention will, in the following be more closely described with references to the Figures, where;
Figure 1 shows a perspective view of a container according to the invention, without a float ring, and
Figure 2 shows, in perspective, a part of a float ring, with the lifting mechanism meshing with a column.

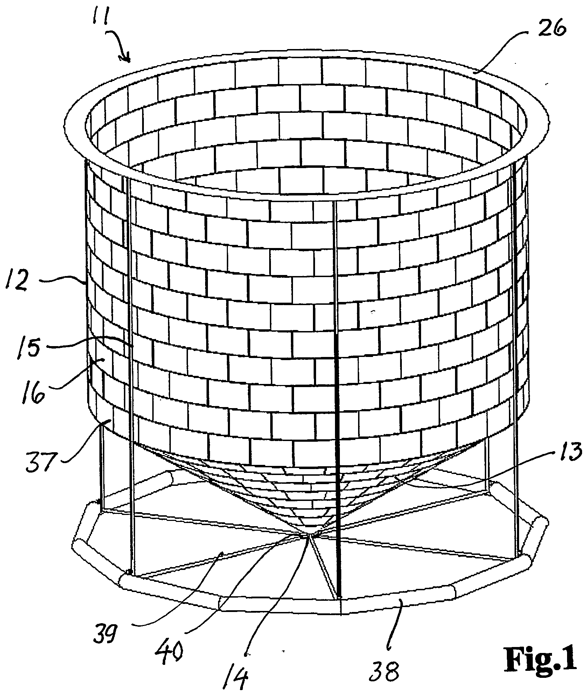

Figure 1 shows a container 11 for fish farming, having a cylindrical sidewall 12 and a funnel-shaped bottom 13. The container may have a diameter of 30 m and a total height of 30 m. At the junction between the sidewall 12 and the bottom 13 there is provided a ring 37 of welded sheets, with a hole 14 in the lower edge of the base.

Around the circumference of the container 11, five vertical tubular columns 15 are arranged with 72° mutual distance. The number of columns 15 can be higher or lower. Each of the columns 15 can be assembled from several sections, which are joined by welding. The columns 15 can have a H-profile, or a different profile.

On top of the tubular columns 15 an annular platform 26 is arranged, which forms a walkway during use of the container, at the same time as it ties the columns 15 together at the top.

The sidewall 12 is constructed of sheets 16, which are joined edge to edge. In the example, used are galvanized expanded metal sheets of steel, e.g. with a size of 2 x 3 metres (Height x Width). As an alternative to expanded metal sheets, sheet structures of plastics which are perforated or with a grid structure can be used. A common property and condition is that the sheets are elastic, but are otherwise stable. For tanks which are to be closed, closed sheets are used.

The sheets 16 can be joined together in several ways, e.g. with edge lists which are joined two and two, preferably detachable.

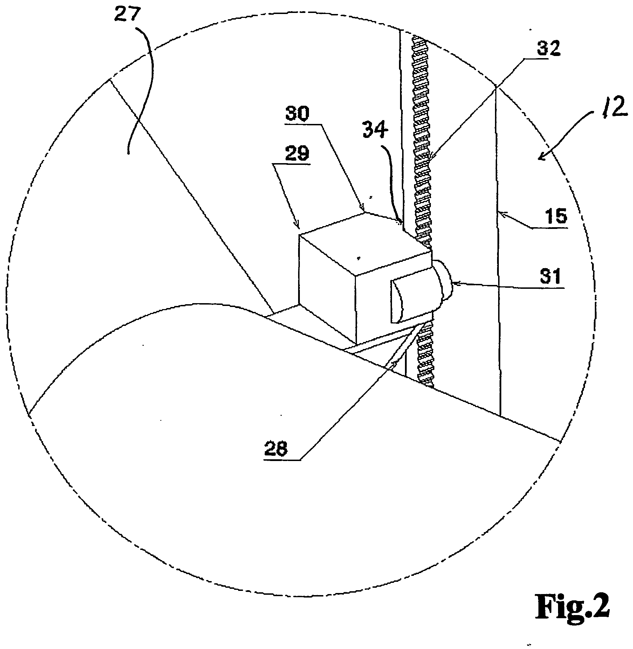

Figure 2 shows a section of the container 11 at a column 15. Around the container 11, a float ring 27 is provided, e.g. of chained closed sections of plastic tubes, possibly filled with foam material. At each column 15, there is, on the float ring 27, arranged a bracket 28 for the coupling of a hydraulic motor 29, which can be powered from an remote hydraulic drive unit. The motor 29 is connected with a gear 30 with self locking worm gear which has a toothed wheel 31 coupled to an output axle. The toothed wheel 31 meshes with a rack 32, attached so that it protrudes radially out from the column 15.

From the gear 30 protrudes a pressure element 34, capable of sliding, possibly with a roller, which bears against the back of the rack 32, to hold the toothed wheel 31 in a secure mesh with the rack 32.

A hydraulic motor 29 with associated gear can alternately power three toothed wheels 31 by means of drive shafts which extend between them. In all cases, the lifting must be done synchronously.

The columns 15 in the example extend down to the plane of the bottom opening. There they are connected with the neighbouring column by means of a tubular girder 39. They are located by means of bars 39 connected with a ring 40, which encloses the bottom opening 14. In this way the columns are not attached to the container wall 12.

The bottom 13 slants down from the container wall 12 with an angle which ensures that dead fish slide down toward the bottom opening 14.

### Method of erection

The parts of a floating net cage with a container according to the invention can be manufactured as elements in a factory. The float ring 27 is assembled from several sections, which each forms a closed unit, and can be jointed with flanges while lying in the water.

The erection of the container 11 starts with the bottom 13 being constructed on shore with grid sheets 16, and the ring 27 jointed together from parts at the location of use. For complementing the bottom 13, in addition to rectangular standard sheets, sheets whose form corresponds to the geometry of the bottom are also needed.

The lower sections of the columns 15 are lined up and attached to the ring 38 and the bars 39. The ring 38 is attached together. In the same manner, the ring 37 which is to form the boundary element between the sidewall 12 and the bottom 13, is attached inside of the columns 15. This bottom structure can now be lifted and placed in the float ring 27, which floats on the water. The racks 32 are brought in mesh with the toothed wheels 31 such that the hydraulic motor 39 can move the columns up and down in relation to the float ring.

The assembly of the sidewall 12 can now start. Grid sheets 16 are assembled to form a rising sidewall. For each joint, the edges are connected to neighbouring plates in suitable way.

As the assembly of the sidewalls 12 proceeds, the finished part of the container 11 is gradually lowered into the sea by operating the hydraulic motor 29. Due to the self locking of the gear 30, the hydraulic motors 29 must be operated actively for all movements of the container.

When the sidewalls 12 are finished, the annular platform 26 is assembled. It includes sections with railing, which are chained together. The platform 26 is attached to the upper edge of the column 15 and the sidewall 12 in a suitable way. The connection tubes for the hydraulic motors 29 are extending to a common connection point which is easy to access from the platform 26.

### Use of a net cage with a container according to the invention

To empty the container 11, the hydraulic motors are connected to a hydraulic drive unit. A flexible tube is connected from the bottom hole to a fish pump, and to a requested location for delivery. The emptying of the container can thus start. The fish pump is started and the container is elevated by the hydraulic motors until the density of fish is of the required mass for pumping. When the density of fish decreases so that the amount of pumped fish declines, the container can again be elevated so the density is of the required mass. This process continues until the container is emptied and the bottom opening is above the water surface.

As an alternative to the racks and the hydraulic powered toothed wheels, synchronously powered winches on the float ring can be used, which each have a wire extending down to and connected to the lower end of the columns 15.

### Modifications

The invention can be used for containment of substances other than farmed fish in water, as long as the contents have a specific weight which does not differ substantially from seawater. It can be water, e.g. freshwater gathered from rivers at a time of year which is rainy or with high amounts melting water which is to be stored for use in dry periods. It can be fish flour, or cereals. In such cases the sheets 16 must be assembled close together, possibly by use of seal lists, sealing material or similar. In such cases, it may also be necessary to provide the container with a cover.

When filling and emptying such a container, you must be sure that the difference in weight between the displaced volume and the contents of the tank is never more than a few tons. Therefore, to fill a container with freshwater, the container must be completely elevated and empty of seawater. As freshwater is added, the container is lowered down to maintain the balance between load and displaced mass. On emptying, the container must be elevated in relation to the fluid level in the container.

## Claims

1. A container for location in water, for collection of fluids, masses or mixtures of objects and fluids, with a specific weight which is not substantially different from the water in which it is to be located, with a cylindrical shape, said container having sidewalls (12) assembled of sheet elements (16) which are joined along their side edges forming a shell construction, **characterized in that**:
at least three vertical support columns (15) are arranged around the circumference of the container, wherein the lower sections of the columns (15) are attached to a bottom ring (38),
and that lifting mechanisms (31, 32) are arranged with the support columns, which can be activated by one or more motors (29) arranged on a float ring (27) enclosing the container to enable displacement of the support columns (15) up and down in relation to the float ring (27).

2. The container according to claim 1, **characterized in that** the lifting mechanisms are activated by one or more motors via gears (30).

3. The container according to claim 2, **characterized in that** the each lifting mechanism comprises:
a rack (32) attached to the support column (15), the rack protruding radially out from the support column, and
a toothed wheel (31) of a gear which meshes with the rack (32).

4. The container according to claim 1 or 2, **characterized in that** the support columns (15) have a tubular profile or a H-profile.

5. The container according to any preceding claim, **characterized in that** it further comprises a funnel-shaped bottom section (13) which is connected to the cylindrical section (12) of the container by a ring of welded sheets (37).

6. The container according to any preceding claim, **characterized in that** an annular platform (26) is attached to the upper sections of the support columns (15).

7. A method for construction of a container (11) according to any one of the preceding claims,
**characterized in that**
the bottom ring (38), at least a portion of the sheet elements (16) and at least the lower part of the support columns (15) are assembled on a support to form a bottom structure,
the float ring (27) is placed on the water with the one or more motors (29) and lifting mechanisms (31) arranged, and
the bottom structure is lifted and placed in the float ring (27) and the lifting mechanism is brought in mesh with the lower part of the container.

8. The method of claim 7, further comprising attaching further sheet elements (16) to the at least a portion of the sheet elements of the bottom structure.

9. The method of claim 8, further comprising gradually lowering the support columns (15)/finished part of the container in relation to the float ring (27) by operating the motor (29).

## Patentansprüche

1. Behälter zum Platzieren im Wasser, zum Sammeln von Fluiden, Massen oder Mischungen von Gegenständen und Fluiden, mit einem spezifischen Gewicht, das sich im Wesentlichen nicht von dem Wasser unterscheidet, in dem er platziert werden soll, mit einer zylindrischen Form, wobei der Behälter Seitenwände (12) hat, die aus Plattenelementen (16) zusammengesetzt sind, die entlang ihrer Seitenkanten verbunden sind, wobei eine Hüllenkonstruktion gebildet ist,
**dadurch gekennzeichnet, dass**:
mindestens drei vertikale Stützpfeiler (15) um den Umfang des Behälters ange-ordnet sind, wobei die unteren Abschnitte der Pfeiler (15) an einem Bodenring (38) angebracht sind,
und dass Hebemechanismen (31, 32) an den Stützpfeilern angeordnet sind, die von einem oder mehreren Motoren (29) aktiviert werden können, die auf einem Schwimmring (27) angeordnet sind, der den Behälter umschließt, um eine Verschiebung der Stützpfeiler (15) nach oben und nach unten bezüglich des Schwimmrings (27) zu ermöglichen.

2. Behälter nach Anspruch 1,
**dadurch gekennzeichnet,**
**dass** die Hebemechanismen von einem oder mehreren Motoren durch Getriebe (30) aktiviert werden.

3. Behälter nach Anspruch 2,
**dadurch gekennzeichnet,**
**dass** jeder Hebemechanismus aufweist:
eine Zahnstange (32), die an dem Stützpfeiler (15) angebracht ist, wobei die Zahnstange radial nach außen von dem Stützpfeiler vorsteht und
ein Zahnrad (31) eines Getriebes, das in die Zahnstange (32) eingreift.

4. Behälter nach Anspruch 1 oder 2,
**dadurch gekennzeichnet,**
**dass** die Stützpfeiler (15) ein röhrenartiges Profil oder ein H-Profil haben.

5. Behälter nach einem der vorherigen Ansprüche,
**dadurch gekennzeichnet,**
**dass** er ferner einen trichterförmigen Bodenabschnitt (13) aufweist, der mit dem zylindrischen Abschnitt (12) des Behälters durch einen Ring geschweißter Platten (37) verbunden ist.

6. Behälter nach einem der vorherigen Ansprüche,
**dadurch gekennzeichnet,**
**dass** eine ringförmige Plattform (26) an dem oberen Abschnitt der Stützpfeiler (15) angebracht ist.

7. Verfahren zum Herstellen eines Behälters (11) nach einem der vorherigen Ansprüche,
**dadurch gekennzeichnet, dass**
der Bodenring (38), mindestens ein Bereich der Plattenelemente (16) und mindestens ein unterer Teil der Stützpfeiler (15) auf einer Unterlage zusammengesetzt werden, um eine Bodenstruktur zu bilden,
der Schwimmring (27) mit den angeordneten einen oder mehreren Motoren (29) und Hebemechanismen (31) auf dem Wasser platziert wird und
die Bodenstruktur angehoben wird und in dem Schwimmring (27) platziert wird und der Hebemechanismus in Eingriff mit dem unteren Teil des Behälters gebracht wird.

8. Verfahren nach Anspruch 7,
welches ferner Anbringen weiterer Plattenelemente (16) an dem mindestens einen Bereich von Plattenelementen der Bodenstruktur aufweist.

9. Verfahren nach Anspruch 8,
welches ferner graduelles Absenken der Stützpfeiler (15)/des fertiggestellten Teils des Behälters bezüglich des Schwimmrings (27) durch Betreiben des Motors (29) aufweist.

## Revendications

1. Contenant pour le positionnement dans de l'eau, pour la collecte de fluides, de masses ou de mélanges d'objets et de fluides, avec un poids spécifique qui n'est pas sensiblement différent de celui de l'eau dans laquelle il doit être positionné, avec une forme cylindrique, ledit contenant possédant des parois latérales (12) assemblées d'éléments en tôle (16) qui sont joints le long de leurs bords latéraux, formant une construction d'enveloppe, **caractérisé en ce que** :
au moins trois colonnes de support verticales (15) sont agencées autour de la circonférence du contenant, dans lequel les sections inférieures des colonnes (15) sont fixées à un anneau de fond (38),
et **en ce que** des mécanismes de levage (31, 32) sont agencés avec les colonnes de support, qui peuvent être activés par un ou plusieurs moteurs (29) agencés sur un anneau flottant (27) entourant le contenant pour permettre le déplacement des colonnes de support (15) vers le haut et vers le bas par rapport à l'anneau flottant (27).

2. Contenant selon la revendication 1, **caractérisé en ce que** les mécanismes de levage sont activés par un ou plusieurs moteurs par l'intermédiaire d'engrenages (30).

3. Contenant selon la revendication 2, **caractérisé en ce que** le chaque mécanisme de levage comprend :
une crémaillère (32) fixée à la colonne de support (15), la crémaillère faisant saillie radialement hors de la colonne de support, et
une roue dentée (31) d'un engrenage qui s'engrène avec la crémaillère (32).

4. Contenant selon la revendication 1 ou 2, **caractérisé en ce que** les colonnes de support (15) possèdent un profil tubulaire ou un profil en H.

5. Contenant selon une quelconque revendication précédente, **caractérisé en ce qu'**il comprend en outre une section de fond en forme d'entonnoir (13) qui est raccordée à la section cylindrique (12) du contenant par un anneau de tôles soudées (37).

6. Contenant selon une quelconque revendication précédente, **caractérisé en ce qu'**une plateforme annulaire (26) est fixée aux sections supérieures des colonnes de support (15).

7. Procédé pour la construction d'un contenant (11) selon l'une quelconque des revendications précédentes,
**caractérisé en ce que**
l'anneau de fond (38), au moins une portion des éléments en tôle (16) et au moins la partie inférieure des colonnes de support (15) sont assemblés sur un support pour former une structure de fond,
l'anneau flottant (27) est placé sur l'eau avec l'un ou plusieurs moteurs (29) et mécanismes de levage (31) agencés, et
la structure de fond est levée et placée dans l'anneau flottant (27) et le mécanisme de levage est mis en engrènement avec la partie inférieure du contenant.

8. Procédé de la revendication 7, comprenant en outre la fixation d'éléments en tôle supplémentaires (16) à l'au moins une portion des éléments en tôle de la structure de fond.

9. Procédé de la revendication 8, comprenant en outre l'abaissement progressif des colonnes de support (15) / de la partie finie du contenant par rapport à l'anneau flottant (27) en mettant le moteur (29) en fonctionnement.
